(19) **Europäisches Patentamt**

**European Patent Office**

**Office européen des brevets**

(11) Publication number: **0 436 805 A2**

(12) # EUROPEAN PATENT APPLICATION

(21) Application number: **90121807.3**

(22) Date of filing: **14.11.90**

(51) Int. Cl.⁵: **B29C 65/70, B29C 67/18, B29C 45/14, //B29K105:06, B29L23:22, B29L31:24**

The title of the invention has been amended (Guidelines for Examination in the EPO, A-III, 7.3).

(30) Priority: **15.11.89 FI 895439**

(43) Date of publication of application:
**17.07.91 Bulletin 91/29**

(84) Designated Contracting States:
**AT BE CH DE DK ES FR GB GR IT LI LU NL SE**

(71) Applicant: **NESTE OY**
**Keilaniemi**
**SF-02150 Espoo(FI)**

(72) Inventor: **Patteri, Matti**
**Hakkurintie 18**
**SF-01680 Vantaa(FI)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**W-8000 München 2(DE)**

(54) **Method and mould for manufacturing a joint surrounded by a joining compound and such a joint.**

(57) The invention relates to a method for manufacturing a joint, in which method the sections (10, 11) to be joined are fitted in place and joined together at their joining point (12), which joining point (12) is covered with a joining compound (13). The joining point (12) and the joining compound (13) are pressed inside a form (14), which form (14) is comprised of at least two form section (14a, 14b). The form sections (14a, 14b) of the form (14) are joined together and sealed around the joining point (12) for achieving a joint (16). The joining compound (13) is bonded in a manner known per se by injecting a binder into the joining point (12). The invention also relates to a form for manufacturing a joint, which form (14) comprises at least two form sections (14a, 14b) and which is manufactured of a thin plastic raw material. In addition, the invention relates to a joint between sections to be joined to each other and covered with a binding compound, in which joint the binding compound (13) is a fiber raw material.

FIG. 2

EP 0 436 805 A2

# A METHOD FOR MANUFACTURING A JOINT AND A JOINT BETWEEN SECTIONS TO BE JOINED TO EACH OTHER AND SURROUNDED BY A JOINING COMPOUND AS WELL AS A FORM FOR MANUFACTURING THE JOINT

The invention relates to a method for manufacturing a joint, in which method the sections to be joined are fitted in place and joined together at their joining point, which joining point is covered with a joining compound.

The invention also relates to a form for manufacturing the joint.

The invention further relates to a joint between the sections to be joined to each other and covered by a joining compound.

As for the prior art, a reference is made to the US patent publication 4, 793, 879, in which is described a method for repairing a damaged area of a composite structure. In this known method, a fettling compound is spread on the area to be repaired, which compound is heated via an opposite side of the composite structure, and after this, pressure is increased into the area to be repaired, whereafter the fettling compound is hardened.

As the use of reinforced-plastic pipes has generalized, one limitation has been the need for suitable joining sections and methods. As known, the branching or extension joints of small reinforced-plastic pipes have been manufactured by utilizing separate glued metallic or plastic sleeves. As known previously, large reinforced-plastic pipes have been joined by means of separately coiled reinforced-plastic sleeves, or the joining sleeve is directly coiled on top of the pipes to be joined.

The main object of the invention is to especially to provide a method for joining reinforced-plastic pipes.

A certain object of the invention is to provide a joint, wherein the joining point is rigid and the surface is well formed.

An object of the invention is also to provide such a joint, especially for reinforced-plastic pipes, the manufacture of which is simple as well as easily and rapidly to be performed.

An object of the invention is also to provide such a form that can be transported to the installation site and installed without having to move the structures when manufacturing the joint.

For achieving the objects presented above and subsequently, the method according to the invention is mainly characterized in that the joining point and the joining compound are pressed inside a form, which form is comprised of at least two form sections, that the form sections of the form are joined together and sealed around the joining point for achieving a joint, and that the joining compound is bonded in a manner known per se by injecting a binder into the joining point.

The form according to the invention is mainly characterized in that the form comprises at least two form sections and that the form is manufactured of a thin plastic raw material.

The joint according to the invention is mainly characterized in that the joining compound is formed of a fiber raw material.

Owing to the light-structured, movable forms according to the invention, the method in accordance with the invention can be readily performed on site without having to move the structures to be joined to each other when manufacturing the joint.

The joint, method and form according to the invention can be adapted to be used for reinforced-plastic pipes and also for pressure pipe joints.

The form to be used in connection with the invention is price-wise economical, and the form can thus even be manufactured disposable. However, the form according to the invention is such that it can be used one or more times, when necessary. Since the form and/or form sections are economical, a multiple-joint structure can be set and injected simultaneously, whereby the production costs can be decreased.

Owing to the simple manufacturing method of the form, the method according to the invention can be readily used for manufacturing joints of many different types. For example, a continuous extension, an extension in the angle desired, a T-joint, an angle joint, a K-joint, a star joint or a modified joint of the dimension are possible by utilizing the method according to the invention. In addition, the forms to be joined can be circular or angular.

The method, form, joint and according to the invention is next described with reference to a certain preferable application example of the invention shown in the figures of the drawing.

Fig. 1 shows schematically a first phase of the method according to the invention.

Fig. 2 shows schematically a second phase of the method according to the invention.

Fig. 3 shows schematically a third phase of the method according to the invention.

Fig. 4 shows schematically a finished joint achieved by means of the method according to the invention.

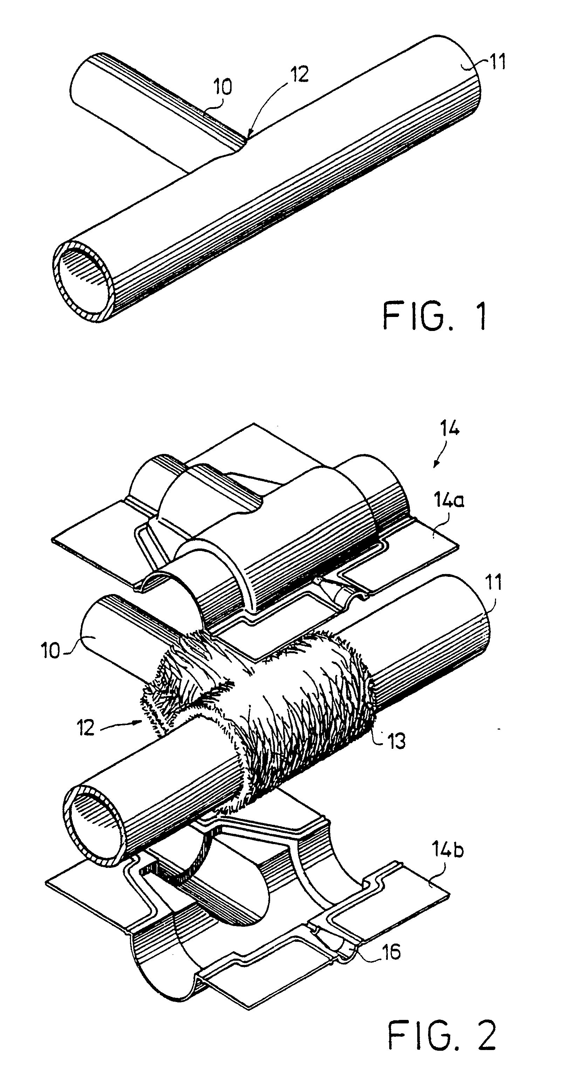

Fig. 1 shows the first phase of the method according to the invention, wherein pipes 10, 11 are fitted in place and glued together at a joining point 12.

Fig. 2 shows the second phase of the method, in which the joining point 12 is covered with a joining compound 13, which can be formed e.g. of glass fiber or other fiber raw material, e.g. of thermoplastic plastic fiber. A form 14 in the figure by way of example is comprised of two form sections 14a, l4b. The form 14 is manufactured e.g. by vacuum forming a thin, for example PVC-sheet. The form 14, which is thin, can be manufactured e.g. by injection moulding a PE plastic raw material.

In the application example of the figure, the form sections are comprised of separate sections, but for example their back sections can be hinged together. The form sections 14a, 14b of the form 14 are joined together and sealed e.g. by means of tape. It is also possible to make in the form sections 14a, 14b e.g. claw forms, by means of which the form sections are joined together. On the division plane of the form sections 14a, 14b is formed a channel 16 for an injection stud.

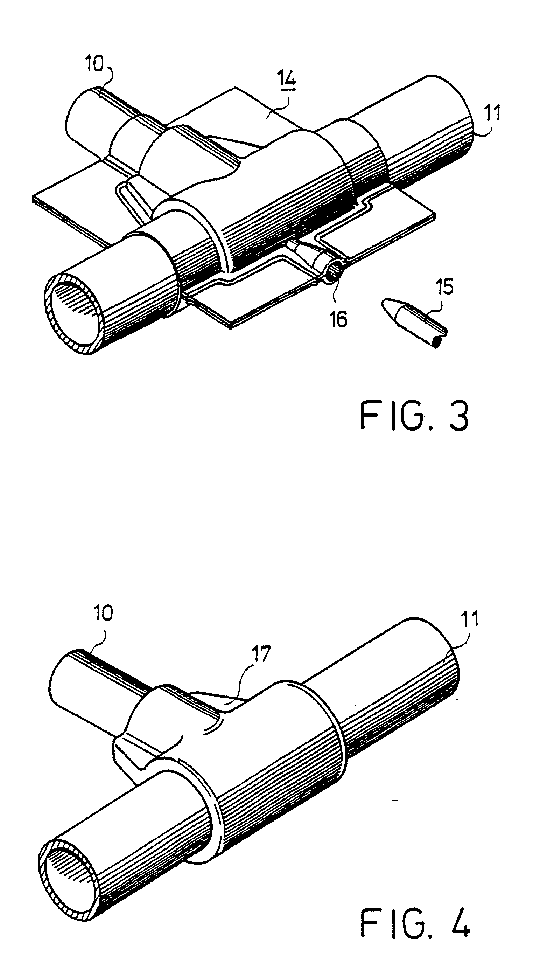

In Fig. 3 is shown a phase of the method, wherein the sections of the form 14 are joined to each other, and in the figure is also shown an injection stud 15, by means of which e.g. a hardening agent is injected via the channel 16 into the joining compound 13, which agent can e.g be resin.

In Fig. 4 is shown a finished joint 17 around the pipes 10 and 11. As described above, the joint is manufactured by setting the premoulded joining compounds 13, i.e. the reinforcements, on the form 14, and the form 14 is positioned and sealed in place at the joining point 12, whereafter a hardening agent, e.g. resin, is injected into the form 14 by means of the injection stud 15 via the channel 16. when the joint has hardened, the form 14 is removed from the top of the joint 17.

The invention has above been described with reference to its one preferred example only. However, the intention is not to limit the invention to only concern this example, but many changes and modifications are possible within the inventive idea defined by the accompanying patent claims.

The invention relates to a method for manufacturing a joint, in which method the sections (10, 11) to be joined are fitted in place and joined together at their joining point (12), which joining point (12) is covered with a joining compound (13). The joining point (12) and the joining compound (13) are pressed inside a form (14), which form (14) is comprised of at least two form section (14a, 14b). The form sections (14a, 14b) of the form (14) are joined together and sealed around the joining point (12) for achieving a joint (16). The joining compound (13) is bonded in a manner known per se by injecting a binder into the joining point (12). The invention also relates to a form for manufacturing a joint, which form (14) comprises at least two form sections (14a, 14b) and which is manufactured of a thin plastic raw material. In addition, the invention relates to a joint between sections to be joined to each other and covered with a binding compound, in which joint the binding compound (13) is a fiber raw material.

**Claims**

1. A method for manufacturing a joint, in which method the sections (10, 11) to be joined are fitted in place and joined together at their joining point (12), which joining point (12) is covered with a joining compound (13), characterized in that the joining point (12) and the joining compound (13) are pressed inside a form (14), which form (14) is comprised of at least two form section (14a, 14b), that the form sections (14a, 14b) of the form (14) are joined together and sealed around the joining point (12) for achieving a joint (16), and that the joining compound (13) is bonded in a manner known per se by injecting a binder into the joining point (12).

2. A method according to Claim 1, characterized in that a premoulded reinforcement is used as the joining compound (13), in which reinforcement a binder is absorbed and which binder bonds and hardens the joining compound (13).

3. A method according to Claim 1 or 2, characterized in that the binder to be used is resin.

4. A method according to Claim 1, characterized in that the bonding compound (13) to be used is a fiber raw material.

5. A method according to Claim 4, characterized in that the fiber raw material is glass fiber.

6. A method according to Claim 1 or 4, characterized in that the bonding compound to be used in the method is thermoplastic fiber.

7. A method according to any of the preceding Claims 1-6, characterized in that the form sections (14a, 14b) of the form (14) are sealed together by means of tape.

8. A method according to any of the preceding Claims 1-6, characterized in that the form sections of the form (14) are fastened to each other by means of forming the form (14), e.g. by claw forms.

9. A form for manufacturing a joint, characterized in that the form (14) comprises at least two form sections (14a, 14b) and that the form is manufactured of a thin plastic raw material.

10. A form according to Claim 9, characterized in that the manufacturing material of the form (14) is a thin PVC-sheet, which is vacuum formed.

11. A form according to Claim 9, characterized in that the form (14) is manufactured by injection moulding a FE raw material.

12. A form according to any of the preceding Claims 9-11, characterized in that the form sections of the form (14) are fastened to each other by means of hinges.

13. A form according to any of the preceding Claims 9-12, characterized in that the form comprises a binder injection channel (16).

14. A form according to any of the preceding Claims 9-13, characterized in that the form sections (14a, 14b) comprise forms, e.g. claw forms, by means of which the form sections (14a, 14b) are bonded together.

15. A joint between sections to be joined to each other and covered by a joining compound, characterized in that the joining compound (13) is a fiber raw material.

16. A joint according to Claim 15, characterized in that the fiber raw material is glass fiber.

17. A joint according to Claim 15, characterized in that joining compound (13) is a thermoplastic fiber.

18. A joint according to any of the preceding Claims 15-17, characterized in that the joining compound (13) is bonded with a binder, which is most preferably a resin.

FIG. 1

FIG. 2

10    14    11

15

16

# FIG. 3

10    17    11

# FIG. 4